# EUROPÄISCHE PATENTSCHRIFT

(11) **EP 0 411 261 B1**
(45) Veröffentlichungstag und Bekanntmachung des Hinweises auf die Patenterteilung: **26.05.1993**
(21) Anmeldenummer: 90109775.8
(22) Anmeldetag: 23.05.1990
(51) Int. Cl.: A23C 19/024, A23C 19/02, A23C 19/076, A23C 19/08

(54) **Verfahren zur kontinuierlichen Herstellung von Quark und Frischkäse**
Process for the continuous production of curd and cottage cheese
Procédé pour la production continuée de fromage blanc et de fromage frais

(30) Priorität: 22.07.1989 DE 3924372
(43) Veröffentlichungstag der Anmeldung: 06.02.1991
(73) Patentinhaber: Westfalia Separator AG, 59302 Oelde (DE)
(72) Erfinder: Bücker, Helmut, D-4724 Wadersloh (DE); Busse, Edgar, D-4720 Beckum (DE)

(56) Entgegenhaltungen:
- DE-A- 2 636 882
- DE-B- 1 130 265
- PATENT ABSTRACTS OF JAPAN Band 4, Nr. 30 (C-2)(512), 15. März 1980; & JP-A-555719 (YASUO SUZUKI) 16.01.1980
- PATENT ABSTRACTS OF JAPAN Band 12, Nr. 11 (C468)(2858), 13. Januar 1988; & JP-A-62166859 (SEIKENSHIYA K.K.) 23.07.1987
- Cheese and Fermented Milk Solids, F. Kosikowski, 2nd Ed. 1978, F.V. Kosikowski and Associates

## Beschreibung

Die Erfindung bezieht sich auf ein Verfahren zur kontinuierlichen Herstellung von Quark und Frischkäse, bei dem dickgelegte Milch einer Zentrifuge zugeführt wird, in deren an der Peripherie mit Düsen versehenen Schleudertrommel die dickgelegte Milch in Molke und Quark getrennt wird, wobei das Quarkkonzentrat über die Düsen in einen Konzentratfänger geleitet wird, aus dem es über einen Auffangbehälter und eine mit diesem verbundene Fördereinrichtung zur weiteren Verarbeitung abgeleitet wird.

Ein Verfahren der vorgenannten Art ist beispielsweise in der DE-AS 11 30 265 beschrieben. Das aus den Düsen in den Konzentratfänger ausgetragene Quarkkonzentrat gelangt unter Luftzutritt in einen nachgeschalteten Auffangbehälter. Bei der Dicklegung der Milch entstehen durch die Umwandlung der Lactose durch Bakterien Gase, insbesondere CO₂. Diese Gase können bei dem bekannten Verfahren in die Atmosphäre entweichen. Andererseits hat aber auch der atmosphärische Sauerstoff ungehindert Zutritt zum Quarkkonzentrat und beeinträchtigt damit die Qualität des Endproduktes. Bei einer Ableitung des Quarkkonzentrates unter Luftabschluß können dagegen die im Quarkkonzentrat enthaltenen Gase nicht entweichen. Diese Gase verändern dann nach einigen Tagen die Struktur und den Geschmack des Quarks.

Der Erfindung liegt die Aufgabe zugrunde, das bekannte Verfahren so zu verbessern, daß einerseits ein Kontakt des Quarkkonzentrates mit dem Luftsauerstoff verhindert wird und andererseits eine optimale Entgasung des Quarkkonzentrates gewährleistet ist.

Diese Aufgabe wird dadurch gelöst, daß die Ableitung des Quarkkonzentrates aus dem Konzentratfänger über die nachgeschalteten Einrichtungen unter Luftabschluß erfolgt und das Quarkkonzentrat einem Unterdruck ausgesetzt wird.

Das Verfahren ermöglicht, das Quarkkonzentrat zu entgasen, ohne dem Luftsauerstoff Zutritt zum Quarkkonzentrat zu gewähren. Der so erzeugte Quark bildet eine homogene Masse ohne Lufteinschlüsse. Auch die weitere Behandlung des Quarkes gestaltet sich einfacher, da unmittelbar nach der Förderpumpe eine kontinuierliche Dichtemessung durchgeführt werden kann, was vorher wegen des Luftanteiles nicht möglich war.

In einer vorteilhaften Ausgestaltung der Erfindung ist der Unterdruck im Konzentratfänger und im Auffangbehälter vorhanden. Das Quarkkonzentrat wird durch die Düsen der Schleudertrommel bei einem Druck von etwa 100 bar ausgetragen und liegt daher kurzzeitig im Konzentratfänger als Flüssigkeitsnebel vor. Dadurch ist eine große Produktoberfläche gegeben, die eine optimale Entgasung ermöglicht.

Wegen der großen Produktoberfläche werden auch schon mit geringen Unterdrücken von z. B. 0,1 bar gute Ergebnisse erzielt. Der Unterdruck sollte höchstens 0,8 bar betragen, wobei die besten Ergebnisse bei einem Unterdruck zwischen 0,2 bis 0,5 bar erzielt wurden. Die Höhe des Unterdrucks hängt dabei von der Trockenmasse der jeweiligen Quarkqualität ab.

In einer weiteren vorteilhaften Ausgestaltung wird dem Konzentratfänger sterile Luft zugeführt. Dadurch wird die Wirkung der Entgasung noch verstärkt. Die Zufuhr der sterilen Luft erfolgt vorzugsweise im Bereich unterhalb der Schleudertrommel, um in diesem Bereich Konzentratablagerungen zu verhindern, die sich bei Betrieb der Zentrifuge unter Luftabschluß leicht einstellen können.

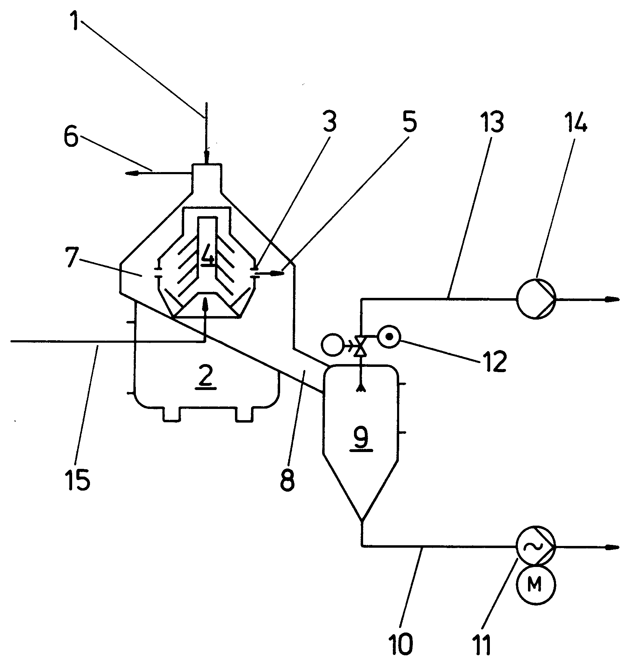

Ein Ausführungsbeispiel der Erfindung ist in der Zeichnung dargestellt und wird nachstehend näher erläutert.

Die dickgelegte Milch 1 wird der Zentrifuge 2 zugeführt und in deren mit Düsen 3 versehenen Schleudertrommel 4 in Quarkkonzentrat 5 und Molke 6 aufgeteilt. Das durch die Düsen 3 stark vernebelte Quarkkonzentrat wird im Konzentratfänger 7 aufgefangen und gelangt über einen luftdichten Kanal 8 in den Auffangbehälter 9, aus dem das entgaste Quarkkonzentrat über eine geschlossene Leitung 10 und eine Fördereinrichtung 11 zur weiteren Behandlung abgeleitet wird.

Über eine mit einer Druckregeleinrichtung 12 versehene Leitung 13 steht der Auffangbehälter 9 mit einer Unterdruckquelle 14 in Verbindung. Der Anschluß der Unterdruckquelle 14 an den Auffangbehälter 9 verhindert das Eindringen von Konzentratnebel in die Leitung 13, da sich der Konzentratnebel schon an den Wänden des Konzentratfängers 7 niedergeschlagen hat.

Über den Anschluß 15 kann ständig eine geringe Menge sterile Luft in den Konzentratfänger 7 geleitet werden, um die Entgasung des Quarkkonzentrates zu unterstützen. Die sterile Luft wird bevorzugt in den zentralen Bereich des Konzentratfängers 7 unterhalb der Schleudertrommel 4 geleitet, um in diesem Bereich Konzentratablagerungen, die vom vernebelten Quarkkonzentrat herrühren könnten, zu verhindern.

## Patentansprüche

1. Verfahren zur kontinuierlichen Herstellung von Quark und Frischkäse, bei dem dickgelegte Milch einer Zentrifuge zugeführt wird, in deren an der Peripherie mit Düsen versehenen Schleudertrommel die dickgelegte Milch in Molke und Quark getrennt wird, wobei das Quarkkonzentrat über die Düsen in einen Konzentratfänger geleitet wird, aus dem es über einen Auffangbehälter und eine mit diesem verbundene Fördereinrichtung zur weiteren Verarbeitung abgeleitet wird, **dadurch gekennzeichnet,** daß die Ableitung des Quarkkonzentrates aus dem Konzentratfänger über die nachgeschalteten Einrichtungen unter Luftabschluß erfolgt und das Quarkkonzentrat im Konzentratfänger und im Auffangbehälter einem Unterdruck ausgesetzt wird.

2. Verfahren nach Anspruch 1, dadurch gekennzeichnet, daß der Unterdruck mindestens 0,1 bar beträgt.

3. Verfahren nach Anspruch 1, dadurch gekennzeichnet, daß der Unterdruck höchstens 0,8 bar beträgt.

4. Verfahren nach einem der Ansprüche 1 bis 3, dadurch gekennzeichnet, daß der Unterdruck in einem Bereich von 0,2 bis 0,5 bar liegt.

5. Verfahren nach einem der Ansprüche 1 bis 4, dadurch gekennzeichnet, daß dem Konzentratfänger sterile Luft zugeführt wird.

6. Verfahren nach Anspruch 5, dadurch gekennzeichnet, daß die Zufuhr steriler Luft in den Konzentratfänger im Bereich unterhalb der Schleudertrommel erfolgt.

## Claims

1. A process for the continuous production of quark and fresh cheese, wherein coagulated milk is fed to a centrifuge equipped with a rotating centrifuge bowl, in which the coagulated milk is separated into whey and quark, said bowl being fitted with nozzles at its periphery for discharging the quark concentrate into a concentrate catcher emptying into a collecting vessel, from where the quark concentrate is conveyed to further processing by means of a conveying device connected to the said collecting vessel, **characterized in that** the discharge of the quark concentrate from the concentrate catcher and through the downstream equipment is effected under airtight conditions and that the quark concentrate in the concentrate catcher and in the collecting vessel is under vacuum.

2. A process in accordance with claim 1, characterized in that the vacuum is at least 0.1 bar.

3. A process in accordance with claim 1, characterized in that the vacuum amounts to max. 0.8 bar.

4. A process in accordance with one of the claims 1 to 3, characterized in that the vacuum ranges from 0.2 to 0.5 bar.

5. A process in accordance with one of the claims 1 to 4, characterized in that sterile air is fed to the concentrate catcher.

6. A process in accordance with claim 5, characterized in that the sterile air feed to the concentrate catcher is effected in the area below the centrifuge bowl.

## Revendications

1. Procédé de fabrication en continu de caillé lissé et de pâtes fraîches, dans lequel le lait emprésuré est alimenté dans une centrifugeuse équipée d'un bol centrifuge en rotation où s'effectue la séparation du lait emprésuré en sérum et caillé, ledit bol étant pourvu de buses périphériques par lesquelles le concentré de caillé est évacué dans un capteur de concentrat, d'où il est envoyé, à travers une cuve collectrice et un dispositif de transport y raccordé, vers le traitement ultérieur, **caractérisé en ce que** l'acheminement du concentré de caillé à partir du capteur de concentrat via les dispositifs branchés en aval est réalisé à l'abri de l'air et que le concentré de caillé à l'intérieur du capteur de concentrat et de la cuve collectrice est exposé à une dépression.

2. Procédé selon la revendication 1, caractérisé en ce que la dépression est de l'ordre d'au moins 0,1 bar.

3. Procédé selon la revendication 1, caractérisé en ce que la dépression est de l'ordre d'au moins 0,8 bar.

4. Procédé selon l'une des revendications 1 à 3, caractérisé en ce que la dépression se trouve dans une plage comprise entre 0,2 et 0,5 bar.

5. Procédé selon l'une des revendications 1 à 4, caractérisé en ce que le capteur de concentrat est alimenté en air bactériologiquement pur.

6. Procédé selon la revendication 5, caractérisé en ce que l'admission d'air bactériologiquement pur dans le capteur de concentrat s'effectue dans la zone en-dessous du bol.
